# EUROPEAN PATENT SPECIFICATION

(11) **EP 3 579 707 B1**
(45) Date of publication and mention of the grant of the patent: **24.03.2021**
(21) Application number: 18713718.7
(22) Date of filing: 08.02.2018
(51) Int. Cl.: A24C 5/36, A24C 5/35, B65G 47/24

(54) **ORIENTATION AND FEEDING SYSTEM AND METHOD FOR FEEDING CIGARETTES AND PROVIDING LONGITUDINAL ORIENTATION TO CIGARETTES, DEVICE AND METHOD FOR RECOVERING TOBACCO FROM CIGARETTES**
AUSRICHT- UND ZUFÜHRSYSTEM UND VERFAHREN ZUM ZUFÜHREN VON ZIGARETTEN UND ZUR LÄNGSAUSRICHTUNG FÜR ZIGARETTEN, VORRICHTUNG UND VERFAHREN ZUR RÜCKGEWINNUNG VON TABAK AUS ZIGARETTEN
SYSTÈME ET PROCÉDÉ D'ORIENTATION ET D'ALIMENTATION POUR L'ALIMENTATION EN CIGARETTES ET LA FOURNITURE D'UNE ORIENTATION LONGITUDINALE À DES CIGARETTES, DISPOSITIF ET PROCÉDÉ DE RÉCUPÉRATION DE TABAC À PARTIR DE CIGARETTES

(30) Priority: 09.02.2017 PL 42043617
(43) Date of publication of application: 18.12.2019
(73) Proprietor: International Tobacco Machinery Poland Sp. z o.o., 26-600 Radom (PL)
(72) Inventor: CHOJNACKI, Wojciech Jerzy, 26-600 Radom (PL)
(74) Representative: Patpol Kancelaria Patentowa Sp. z o.o.
(86) International application number: PCT/IB2018/050771
(87) International publication number: WO 2018/146605

(56) References cited:
- WO-A1-2012/144915
- WO-A1-2013/075791
- GB-A- 325 705
- US-A- 3 665 931

## Description

The invention relates to an orientation and feeding system for feeding cigarettes and providing a longitudinal orientation to cigarettes and a device for recovering tobacco containing this system. The invention also relates to a method for orienting and feeding cigarettes and providing a longitudinal orientation to cigarettes and a method for recovering tobacco from cigarettes. The system, device and methods of the invention are applicable in systems of recovering tobacco from waste cigarettes, in particular waste filter cigarettes.

During production of cigarettes, some of the cigarettes produced do not meet the quality standards, and some cigarettes are damaged during production. Cigarettes produced during the machine start-up are rejected without checking quality of the cigarettes, because most of the cigarettes do not meet the quality requirements. Such cigarettes constitute production waste. Cigarettes collected for inspection are also considered as waste cigarettes. Waste cigarettes also include cigarettes that themselves meet the quality requirements, but which have been packaged into a defectively manufactured package. Usually, what is recovered from waste cigarettes is tobacco, and sometimes filter material. The tobacco recovered from waste cigarettes is reused in production.

To enable the recovery of the particular components of a waste cigarette, waste cigarettes are processed in a tobacco recovery device. The tobacco recovery device is intended to separate the particular components of the cigarette from each other.

Cigarette manufacturers are willing to recover as much tobacco as possible. It is particularly important for all the tobacco contained in the waste cigarette to be separated from the other components of the waste cigarette. In addition, tobacco cannot be contaminated if the separated tobacco is to be reused in production. During the tobacco recovery process, tobacco may be contaminated by filter fragments, in particular filter granules, e.g. carbon granules in combined filters, or fragments of wrapper material or capsule in filters with a capsule. Capsules placed in the filter contain fragrances or flavours. If the capsule is damaged in the tobacco recovery process, its contents will contaminate the tobacco. Moreover, if fragments of the damaged filter contaminate tobacco, they become toxic to the smoker smoking the cigarette.

In the tobacco recovery process, when performing longitudinal perforation of the cigarette, the risk of tobacco contamination is particularly high if the cigarettes are not properly oriented. Longitudinal perforation of the cigarette is very advantageous in terms of the amount of tobacco recovered from the cigarette. The longitudinal perforation of the cigarette performed allows for recovering all the tobacco contained in the cigarette. During the longitudinal perforation process of the cigarette, the cover material of the cigarette is perforated or cut over the entire length of the tobacco portion. However, perforation should not damage the filter portion of the cigarette.

In order for the cutting or longitudinal perforation could be performed so as not to damage the filter or the capsule, it is essential that all of the cigarettes being perforated were oriented longitudinally relative to the perforating element. This prevents cigarettes from being oriented at an angle during perforation or being stacked one on top of the other.

EP2364605A2 discloses a system in which, in order to provide a longitudinal orientation to cigarettes, i.e. parallel to the direction of movement of the cigarettes, non-arranged cigarettes are delivered from a chute to a grooved feeder. In this system, non-arranged cigarettes randomly fall from the chute into the grooved feeder. The disadvantage of the solution is that only some of the cigarettes fall into the grooves of the grooved feeder and are properly fed to the perforating element. Some of the cigarettes do not fall into the grooves of the grooved feeder, so that the cigarettes are fed to the perforating element in a longitudinally non-oriented arrangement. As a result, these cigarettes are perforated improperly, i.e. not along their axis. Furthermore, a cigarette oriented at an angle other than substantially 0° relative to the perforating element can be delivered to the perforating unit element together with another cigarette with which the cigarette is crossed. As a result, two cigarettes placed one on top of the other will be delivered to the perforating element. Since the settings of the perforating element are adjusted to one cigarette, when two cigarettes are delivered at the same time, the cigarettes will be crushed, which usually results in damage to the filter, which leads to the leak of the filter material and the crush of the capsule in capsule filters. This results in the paper being damaged or incompletely cut and/or in the filter and/or capsule no longer being intact. As a result, not all tobacco can be recovered from the cigarette and/or the tobacco recovered is contaminated with the filter and/or capsule material, which reduces the efficiency of the tobacco recovery process.

Other customary feeding systems are described in WO 2012/144915 A1 and in particular US 3 665 931 which describes a feeding system and methods comprising the features mentioned in the preambles of the present claims 1, 12 and 13.

Accordingly, the aim of the invention is to provide an orientation and feeding system for a tobacco recovery device that, at the outlet of the system, provide a substantially longitudinal orientation to cigarettes, which cigarettes at the inlet of the system were randomly oriented or were pre-oriented.

The aim of the invention is also to provide a high efficiency device for recovering tobacco.

The aim of the invention is also to provide a method for providing a longitudinal orientation to cigarettes wherein the number of slantwise oriented cigarettes is minimised.

The object of the invention is the orientation and feeding system for feeding cigarettes and providing a longitudinal orientation to cigarettes for a tobacco recovery device, comprising a belt conveyor and a feeder for feeding cigarettes to the belt conveyor comprising at least one transport channel for receiving, orienting and transporting cigarettes, wherein the transport channel comprises side walls located above the belt conveyor in the direction of movement of the belt conveyor and a bottom, which is constituted by the belt surface of the belt conveyor, with the width of the transport channel decreasing towards the bottom.

The orientation and feeding system of the invention allows for the cigarettes, delivered from the feeder in a pre-arranged manner, to be oriented substantially longitudinally at its outlet in a large majority of cases. The substantially trough-shaped transport channels provided allow for the cigarettes delivered to the transport channels to slide down the walls of the transport channel to the bottom of the transport channel, which is constituted by the belt of the conveyor belt, to achieve a longitudinal or substantially longitudinal position at the bottom of the channel.

The walls of the transport channel are located directly above the belt conveyor, without limiting the movement of the belt conveyor, but sufficiently close to the belt conveyor so that the cigarettes are carried by the belt conveyor on the belt surface limited by the side walls of the specific transport channel. As the bottom of the transport channel is mobile, cigarettes are arranged on the belt in the direction of movement of the belt.

As the width of transport channel narrows towards the bottom, gravity makes the cigarette only take positions that are increasingly closer to substantially longitudinal ones. As a result, the cigarettes fall into the target grooves of the subsequent section of the device individually and properly, i.e. in the orientation that facilitates the fall into the groove.

Preferably, the bottom of the transport channel has a width corresponding to a width of up to four diameters of a cigarette, preferably a width of two to three diameters of a cigarette.

By selecting the width of the transport channel to be the width of up to four diameters of the cigarette, the angle at which the cigarette can be oriented when the cigarette is carried by the orientation and feeding system is decreased, ensuring that the cigarette falls into a single groove of the subsequent section of the device.

Preferably, the width of the bottom of the transport channel is adjustable.

The possibility of adjusting the width of the bottom allows for using the orientation and feeding system for cigarettes of different diameters.

Preferably, the side walls of the transport channel have a substantially arcuate surface.

The arcuate surface of the side walls allows for a controlled and smooth fall of the cigarettes towards the bottom, preventing the cigarette from taking an orientation increasingly differing from the substantially longitudinal position.

Preferably, the side walls of the transport channel have a flat surface.

The flat surface of the side walls allows for a controlled and smooth fall of short cigarettes, preventing the cigarette from taking an orientation increasingly differing from the substantially longitudinal position.

Preferably, the system comprises at least two transport channels arranged adjacent to each other by the side walls.

Due to the use of one belt conveyor, over which side walls of multiple channels are placed, cigarettes are transferred in all the channels at the same speed. In addition, the design of the system is simpler when the system comprises one belt conveyor.

Preferably, the system further comprises a chute arranged between the feeder and the transport channel, wherein the chute comprises at least one chute channel for feeding cigarettes to the transport channel.

The chute arranged between the feeder and the transport channel ensures preliminary orientation of the cigarettes at the inlet of the transport channel. In addition, if the cigarettes are preliminarily oriented on the feeder by the chute, the preliminary orientation will not be lost.

Preferably, the chute channel has the shape of a rounded L letter.

The shape of the rounded letter L ensures that cigarettes pass smoothly through the chute channel and are oriented in a way to facilitate them to reach the longitudinal orientation in the transport channel. In addition, the curvature of the chute channel, by slowing down the speed of movement of the cigarette, prevents the cigarette from uncontrollably falling into adjacent transport channels.

Preferably, the feeder is a vibration feeder.

The vibration feeder provides very effective preliminary longitudinal orientation of cigarettes.

Preferably, the feeder is provided with separators for separating cigarettes fed by the feeder.

The separators increase the efficiency of orienting the cigarettes.

Preferably, the belt conveyor is inclined at an angle relative to the horizontal longitudinal plane crossing the orientation and feeding system, wherein the value of the angle is between 0° and 15°.

The alpha angle in the range between 0° and 15° ensures the cigarette is placed on the belt conveyor in an angular position that is substantially a longitudinal position that facilitates proper feeding of the cigarette to the grooves of the grooved perforating unit.

Further object of the present invention is a device for recovering tobacco from cigarettes comprising:
a perforating unit comprising rotating disc knives for longitudinally perforating cigarettes,
an opening system for extracting tobacco from perforated cigarettes comprising a rotating opening device and
a separation system for separating tobacco from a protective material and/or a filtering material of mouthpieces comprising at least one orientation and feeding system of the invention for feeding cigarettes to the perforating unit.

Thanks to the tobacco recovery device comprising the orientation and feeding system of the invention, which system is placed ahead of the perforating unit, a substantially longitudinal orientation of cigarettes is provided before the cigarettes are delivered to the perforating unit. As a result, the quantity of cigarettes that are delivered to the perforating unit in a substantially longitudinal position is maximized. The use of the orientation and feeding system allows for the tobacco recovery device to operate at a higher speed.

Preferably, the perforating unit comprises a grooved conveyor, wherein the grooved conveyor is inclined at an angle relative to a horizontal longitudinal plane crossing the tobacco recovery device, wherein the angle is between 15° and 60°, preferably 40°.

The use of angular inclination and grooves ensures that the cigarettes are properly delivered under the perforating means, such as rotating knives so that the cigarettes do not stack up on top of each other and that the cigarettes have a substantially longitudinal orientation.

The object of the invention is a method of feeding cigarettes and providing a longitudinal orientation to cigarettes, wherein the method comprising:
- feeding cigarettes into at least one transport channel for receiving, orienting and transporting cigarettes, wherein the transport channel comprises side walls located above the belt conveyor in the direction of movement of the belt conveyor and a bottom constituted by the belt conveyor belt surface, wherein the width of the transport channel decreases towards the bottom,
- transporting cigarettes through the transport channel in the direction of movement of the belt conveyor, providing a longitudinal orientation to the cigarettes in the direction of movement of the belt conveyor.

The object of the invention is also a method of recovering tobacco from cigarettes, wherein the method comprising
- perforating cigarettes in a perforating unit for perforating cigarettes,
- extracting tobacco from the perforated cigarettes in an opening system,
- separating tobacco from the cover material of the cigarettes and/or the filtering material of the mouthpieces in the separation system, wherein
- before the cigarettes are delivered to the perforating unit, feeding the cigarettes into at least one transport channel is performed for receiving, orienting and transporting cigarettes, wherein the transport channel comprises side walls located above the belt conveyor in the direction of movement of the belt conveyor and a bottom constituted by the belt conveyor belt surface, wherein the width of the transport channel decreases towards the bottom, and
- cigarettes are being transported through the transport channel in the direction of movement of the belt conveyor, providing a longitudinal orientation to the cigarettes in the direction of movement of the belt conveyor and delivering the cigarettes to the perforating unit.

In the method for recovering tobacco using the orientation and feeding system of the invention, the cigarettes are delivered to a perforating system in longitudinal orientation ensuring perforation of the entire tobacco portion of the cigarette, which significantly increases the efficiency of tobacco recovery. Moreover, the amount of improperly perforated cigarettes is reduced, which reduces the amount of tobacco contaminated by filter pieces, wrapping material or contaminated by the contents of the capsule.

The object of the invention is shown in the embodiment in the drawing, where:
fig. 1 shows a fragment of a tobacco recovery device in a perspective view, in particular the orientation and feeding system of the invention; fig. 2 is a side view of a tobacco recovery device;
fig. 3 is a top view of a dual tobacco recovery device.

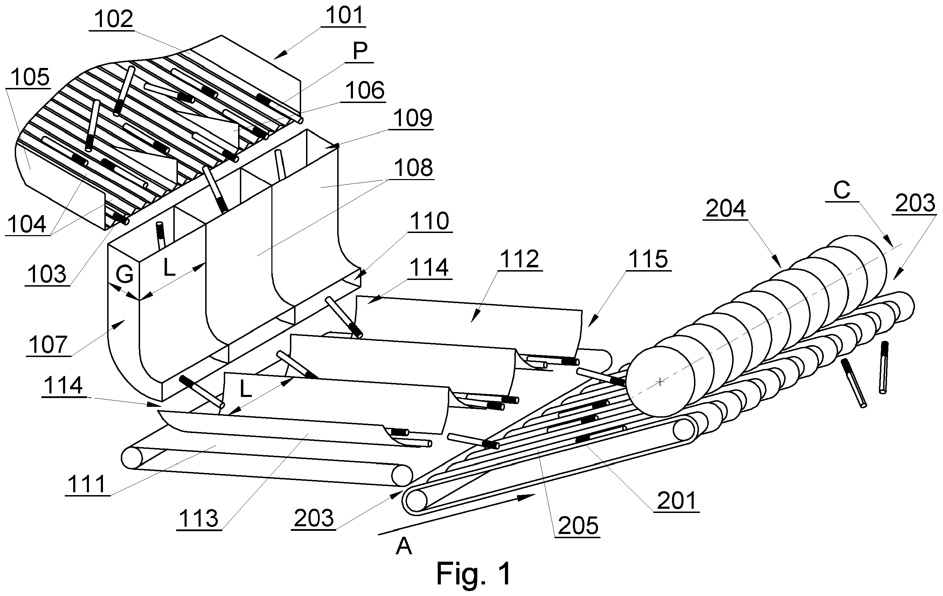

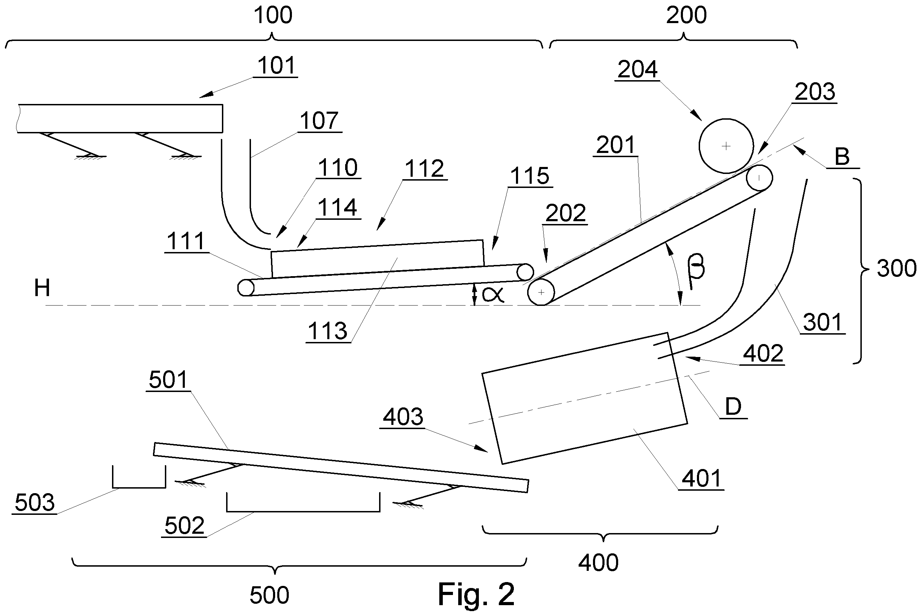

The tobacco recovery device typically has several sections, e.g. an orientation and feeding system 100 for feeding cigarettes, a perforating unit 200, a system 300 for receiving perforated waste cigarettes P, an opening system 400 for opening cigarettes and, finally, the separation system 500 for recovering tobacco as shown in fig. 2. Fig. 1 shows a perspective view of the first section of the tobacco recovery device 1 for recovering tobacco according to the invention, i.e. the orientation and feeding system 100 and a second section, constituting the perforating unit 200.

The first section is designed for single-layered and longitudinal arrangement of subsequent cigarettes before the cigarettes are fed into the second section, i.e. the perforating unit 200. Preferably, the orientation and feeding system 100 comprises a linear vibration feeder 101 in the form of a tray 102 having a bottom 103 with a suitable width, ending on the sides with outer walls 105. The tray 102 of the vibration feeder 101 has grooves 104 made in its bottom 103 which are directed along the direction of movement of waste cigarettes P on the vibration feeder 101. The grooves 104 have a properly selected width and depth so that the grooves preliminarily orient the moving waste cigarettes P. The bottom 103 of the tray 102 of the vibration feeder 101 may be located substantially horizontally or at a small angle to ensure a relatively slow transport of the waste cigarettes P. As a result, the waste cigarettes P are on the vibrating conveyor 101 long enough to allow for the vibrations of the vibration feeder 101 and grooves 104 to cause proper longitudinal orientation of the waste cigarette P relative to the direction of movement of the waste cigarette P before the waste cigarette P is out of the vibration feeder 101. In addition, at the end of the tray 102, the bottom 103 of the tray 102 of the vibration feeder 101 is divided every several grooves 104 by suitable separators 106, which have the form of fins protruding perpendicularly from the bottom 103 of the tray 102 and arranged longitudinally to the direction of movement of the waste cigarettes P. In another embodiment, the separators 106 may be located in a plurality of different locations along the length of the tray 102. The separators 106 separate the waste cigarettes P in the orientation and feeding system into at least two parallel paths. The separators 106 allow for the moving waste cigarettes P to be separated into smaller groups and held so that the cigarettes originally moving transversally to the direction of feeding are rotated so as to take a position close to the longitudinal one and so that the cigarettes in this position will move to the subsequent subunit forming a movement path for the cigarettes. Preferably, the separators 106 are in the form of walls with a triangular or trapezoidal lateral surface, wherein the height of the wall of the separator 106 is the greatest at the end edge of the vibration feeder 101, i.e. at the outlet of the tray 102. Any other shape of the separator 106 is possible that provides contact, for the predetermined operating parameters of the vibration feeder 101, with the transported waste cigarette P, causing a rotation of the waste cigarette P to a longitudinal position on the bottom 103 of the tray 102 before the waste cigarette P is out of the vibration feeder 101.

As shown in fig. 1, behind the vibration feeder 101, there is a chute 107, constituted by three adjacent tubular chute channels 108. In another variant, the chute 107 may take the form of a single chute channel 108. The entire chute 107 has a width substantially equal to the width of the bottom 102 of the tray 103 of the vibration feeder 101. The width L of the single tubular chute channel 108 has a width equal to the distance between the side wall 105 and the nearest separator 106 of the vibration feeder 101 or equal to the distance between two adjacent separators 106 of the vibration feeder. As a result, the tubular chute channel 108 forms a further portion of the movement path for the waste cigarette P, formed by the separators 106 at the outlet of the tray 102 of the linear vibration feeder 101. The second dimension G of the chute 107, or the second dimension G of the single chute channel 108 in cross-section relative to the direction of movement of waste cigarettes P is selected accordingly. Namely, it ensures that the waste cigarettes P, which are pre-aligned in the longitudinal direction to the direction of movement, that fall due to gravity from the vibrating feeder 101, always reach with their one end the lumen of the inlet 109 of the chute channel 108 and are further arranged longitudinally to the direction of movement. The cross-section of the chute channel 108 is preferably a rectangle or a square. The chute 107, preferably consisting of at least two chute channels 108, is an intermediate component of the orientation and feeding system 100 design, and it serves to move the waste cigarettes P from one plane, located above, to another plane, located below, while maintaining longitudinal position of the waste cigarettes P. This position is ensured by the force of gravity as well as the vertical walls of the tubular chute channels 108. Moreover, in order to ensure that the waste cigarettes P fall down properly to the lower plane of the subsequent subunit of the orientation and feeding system 100, the chute 107 and all of its chute channels 108 are longitudinally cross-sectional to the direction of movement of the cigarettes, and, more specifically, the chute 107 and all of its chute channels 108 are curved along the dimension G in the lower part towards the direction of movement, so that in this cross-section the chute 107 and all of its chute channels 108 substantially have the shape of a rounded letter L, wherein the outlet 110 of the chute channels 108 is substantially perpendicular to the inlet 109 of the chute channels 108.

Below the outlet 110 from the chute channels 108 there is a belt conveyor 111. The waste cigarettes P are delivered to the support surface of the belt conveyor 111 within the transport channel 112. Due to the force of friction, the belt conveyor 111 provides a stable movement of the waste cigarette P to the subsequent section of the tobacco recovery device, i.e. to the perforating (cutting) unit 200. Preferably, at a minimum distance above the belt conveyor 111 there are walls 113 of the transport channels 112 in the form of adjacent troughs without a fixed bottom, arranged longitudinally to the direction of movement of the belt conveyor 111. Thanks to the walls 113, the waste cigarettes P that fall freely from the chute 107 are arranged during the operation of the device on the surface of the belt conveyor 111 longitudinally to the direction of movement of the waste cigarettes P. Generally, in the orientation and feeding system 100 of the invention, at least one transport channel 112 is provided for receiving, orienting and transporting cigarettes. The transport channel 112 comprises side walls 113 located above the belt conveyor 111 in the direction of movement of the belt conveyor 111 and a bottom constituted by the belt surface of the belt conveyor 111. The width of the transport channel 112 decreases towards the bottom. The width of the single transport channel 112 at its widest point, i.e. at the interface with the lower edge of the outlet 110 of the chute 107, is substantially equal to the width L of the single chute channel 108. The two walls 113 of the single transport channel 112 are formed such so as to form a trough together with the bottom. The side walls 113 are arranged longitudinally to the direction of movement of the belt conveyor 111, which direction is also the direction of movement of the waste cigarettes P. Preferably, the walls 113 have a curved surface, in particular an arcuate, elliptical, parabolic or cylindrical surface. In another embodiment, the walls 113 have a flat surface oriented at a proper angle relative to the plane of the belt conveyor 111 to form a trapezoidal trough. The bottom of the transport channel 112 is mobile. Preferably, the bottom of the trough is the belt surface of the belt conveyor 111. Preferably, the bottom of all of the transport channels 112 is a single belt conveyor 111. In another embodiment, the bottom of each transport channel may be a separate belt conveyor 111 or its equivalent. The bottom of the transport channel 112 has a width corresponding to two or three, up to four diameters of a cigarette. The walls of the transport channel 113 are shaped so that, in the event of any deviations from the optimal movement trajectory of the waste cigarettes P, in contact with any part of the waste cigarette the walls of the transport channel 113 cause a controlled sliding of the waste cigarette P to achieve a substantially longitudinal position on the belt conveyor 111. The belt conveyor 111 may be, as shown in fig. 2, located at an angle α, preferably in the range between 0 and 15° relative to the horizontal longitudinal plane H passing through the orientation and feeding system 100. Proper inclination of the belt conveyor 111 helps to properly position the waste cigarettes P. The transport channels 112 and the belt conveyor 111 are sufficiently long, and the speed of the belt conveyor 111 and its inclination angle α properly selected so that the lower edges of the walls 113 provide a substantially longitudinal falling of the waste cigarette P onto the surface of the belt conveyor 111 relative to the direction of movement.

As a result, at the end of the conveyor belt 111, at the outlet 115 of the transport channels 112, each waste cigarette P has a substantially fully longitudinal position. As a result, the orientation and feeding system 100 provides that the waste cigarettes P are fed in a strictly controlled position, suitable for the configuration of the inlet 202 to the perforating unit 200, which is designed to perforate the cigarette paper. More specifically, the cigarettes that fall from the conveyor belt 111 from a relatively low height, since the cigarettes are already longitudinally positioned, will not have time to adopt a different position before the inlet 202 to the perforating unit 200, i.e. the cigarettes are fed in a longitudinal position to the subsequent conveyor.

As mentioned above, the orientation and feeding system 100 is followed by a perforating section, i.e. the perforating unit 200 for perforating the waste cigarettes P. The perforating unit 200 comprises a grooved conveyor 201 in the form of a conveyor belt with longitudinal grooves 205, i.e. arranged in line with the direction of transport A. The grooved conveyor 201 is inclined at an angle β, preferably in the range of 15° to 60°, relative to the horizontal longitudinal plane H crossing the tobacco recovery device 1. A more advantageous aligning action of grooved conveyor 201 is demonstrated in the range from 30° to 50°, and most preferably, the grooved conveyor 201 is arranged at an angle of 40°. The grooved conveyor 201 moves at a speed in the range from 0.1 m/s to 1 m/s; preferably, the groove transporter speed is in the range from 0.3 m/s to 0.8 m/s. In the most preferred case, the groove conveyor 201 moves at a speed of 0.7 m/s, with higher speeds being recommended for a larger angle β. The waste cigarettes P fall from the outlet 115 of the belt conveyor 111 of the transport channels 112 to the inlet 202 of the grooved conveyor 201. The grooves 205 of the grooved conveyor 201 are designed for orienting the waste cigarettes P so that the longitudinal axes of the waste cigarettes P are always arranged in line with the direction of transport A before being delivered to the perforating means 204 of the perforating unit 200. Preferably, the perforating means 204 may be in the form of a rotating disc knife equipped with a cutting serrated edge at its rim, mounted on a shaft (not shown), wherein the rotation axis C of the disc knives is arranged parallel to the perforation plane B, which is the plane in which the longitudinal axes of the waste cigarettes P are moved along the grooves 205 of the grooved conveyor 201.

In a preferred embodiment, the device for recovering tobacco shown in fig. 2 may comprise the perforating unit 200 followed by another feeder e.g. a drum or a linear feeder (not shown), from which the waste cigarettes P fall into the receiving system 300 for receiving perforated cigarettes. Preferably, the waste cigarettes P, after passing through the perforating unit 200, fall freely from the outlet 203 of the grooved conveyor 201 to the receiving system 300 for receiving perforated cigarettes in the form of a chute channel 301 in which the waste cigarettes P move into the opening system 400 for opening cigarettes. An opening system comprising a rotating opening unit 401 for opening cigarettes has been described, for example, in the international publication WO2012112062A1. Preferably, the rotating opening unit 401 for opening cigarettes may comprise a cylindrical rotating drum (fig. 2), to the inside of which scraper partition-like means are fixed, arranged substantially along the drum (not shown). The cylindrical drum is rotatably mounted on the axis D, the drum axis being inclined relative to the horizontal plane H. The opening system 400 for opening cigarettes is provided inside the drum with at least one rotating hammer, rotating or counter-rotating around an axis parallel to the axis of rotation D of the drum, preferably also around the axis D. The force with which the hammer strikes the waste cigarette P results in a temporary deformation of the cigarette. Upon hitting a cigarette whose paper is cut or perforated, the deformation of the cigarette will cause the paper to rupture. In the case of the waste cigarettes P whose paper has not been perforated or cut, repeated hitting and deformation of the cigarette during the passage of the cigarette through the drum will result in loosening the tobacco inside the cigarette and will force the tobacco out of the cigarette upon subsequent hits.

After passing through the opening system 400 for opening cigarettes, waste cigarettes with open papers and the released tobacco fall through the outlet 403 of the drum onto the separation system 500 for recovering tobacco. Preferably, the separation system 500 for recovering tobacco comprises a vibration feeder 501 or a vibration sieve 501 positioned at an angle to the horizontal plane H that crosses the entire device 1. In the separation system 500 for recovering tobacco, tobacco is separated from the paper and filter as a result of vibrating movements. The separated tobacco gets into the proper container 502, the while the cut paper and the mouthpiece portion of the cigarette get into the second container 503.

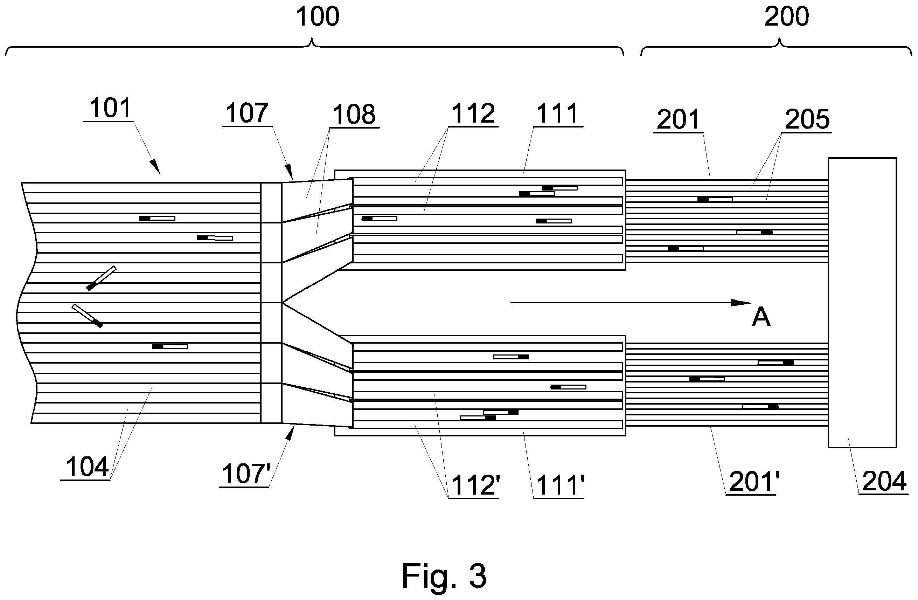

In another embodiment, as shown in fig. 3, the orientation and feeding system 100 may comprise a single vibration feeder 101 followed by two separate chutes 107, followed by two separate conveyor belts 111, above which there are two separate groups of transport channels 112. In the so-called dual orientation and feeding system 100, downstream of the two belt conveyors 111 provided with transport channels 112, the waste cigarettes P fall onto a dual perforating unit 200 that comprises two separate grooved conveyors 201 above which single perforating means 204 are arranged common for both grooved conveyors 201, e.g. in the form of rotating perforating knives.

The method for recovering tobacco from cigarettes of the invention consists in the waste cigarettes P being first fed and oriented longitudinally, then the waste cigarettes P are perforated in the perforating unit for the perforation of cigarettes, tobacco is extracted from the perforated cigarettes in the opening system 400, preferably in the rotating opening unit 401 for opening cigarettes, and finally tobacco is separated from the cover material of the cigarettes and/or the filtering material of the mouthpieces in the separation system 500, preferably on the vibration feeder 501. The method of the invention is carried out so that during the operation of the device 1 for tobacco recovery (as shown in fig. 2), the waste cigarettes P, or more generally rod-like tobacco products, upon entering the orientation and feeding system 100 (fig. 1) as a result of vibrating movements of the feeder 101, move along the vibration feeder 101. As the waste cigarettes P move towards the chute 107, the waste cigarettes P fall into the grooves 104 provided in the bottom 103 of the tray 102 of the feeder and move further in the grooves 104 in a longitudinal position parallel to the direction of feeding. Cigarettes originally moving transversely to the grooves 104 or cigarettes crossed with other cigarettes are rotated by separators 106 so that most or all of the cigarettes are moved along the grooves 104 and, in addition, the cigarettes move in one layer. In an embodiment of the cigarette feeding method and conferring longitudinal orientation to cigarettes, cigarettes are inserted into at least one transport channel 112 for receiving, orienting and transporting cigarettes. In other words, the waste cigarettes P fall through the chute 107 into the transport channels 112, with the ends of the waste cigarettes P abutting against the walls 113 of the transport channels 112 and against the belt conveyor 111, whose surface constitutes the bottom of the channels 112. As a result of the forward movement of the belt conveyor 111, the ends of the waste cigarettes P are pulled in the direction of movement A of the belt conveyor 111 so that the cigarettes slide down the walls 113 of the transport channels 112 and are arranged on the belt of the belt conveyor 111 in the direction of movement of the belt and substantially parallel to the walls of the transport channels 112. Chute 107 is shaped so as to make the cigarettes that fall through the chute 107 and fall out of the outlet 110 take a longitudinal position in line with the direction of transport A in the transport channels 112, which facilitates proper orienting of the cigarettes on the bottoms of the channels 112. In other words, in the method of the invention, cigarettes are transported through the transport channel 112 in the direction of movement of the belt conveyor 111, conferring to the cigarettes a longitudinal orientation in the direction of movement of the belt conveyor 111 and delivering the cigarettes to the perforating unit 200. The use of consecutive subunits in the orientation and feeding system 100 that form parallel paths for the waste cigarettes P during their transfer, i.e. by separators 106, chute channels 108 and transport channels 112, allows for limiting the space in which it would be possible for a waste cigarette P to deviate laterally from the planned longitudinal position relative to the direction of movement. As a result, the waste cigarettes P individually reach, through respective grooves of the grooved conveyor 201, in a longitudinal position suitable for making perforations, under the perforating means 204. In particular, due to a specific design of the transport channels 112, it is highly unlikely that the moving waste cigarette P will change its position and the cigarette tends to have a substantially perfectly longitudinal arrangement in the direction of transport A before the cigarette reaches the grooved conveyor.
- P: - waste cigarette
- A: - direction of transport
- H: - horizontal parallel plane running throughout the device
- B: - perforated plane
- C: - rotation axis of perforating means
- D: - drum rotation axis
- 100: - orientation and feeding system
- 200: - perforating unit
- 300: - receiving system for receiving perforated cigarettes
- 400: - opening system for opening perforated cigarettes
- 500: - separation system for tobacco recovery
- 101: - vibration feeder
- 102: - vibration feeder tray
- 103: - tray bottom
- 104: - tray groove
- 105: - feeder side wall
- 106: - separator
- 107: - chute
- 108: - chute channel
- 109: - chute channel inlet
- 110: - chute channel outlet
- 111: - belt conveyor
- 112: - transport channel
- 113: - transport channel wall
- 114: - transport channel inlet
- 115: - transport channel outlet
- α: - transport channel inclination angle (0-15°)
- 201: - grooved conveyor
- 202: - grooved conveyor inlet
- 203: - grooved conveyor outlet
- β: - grooved conveyor inclination angle (15-60°)
- 204: - perforating means for perforating cigarettes
- 205: - grooved conveyor groove
- 301: - chute channel
- 401: - rotating opening unit for opening cigarettes
- 402: - opening unit inlet
- 403: - opening unit outlet
- 501: - vibration feeder (vibration sieve)
- 502: - container for recovered tobacco
- 503: - container for waste paper and filter material of the mouthpiece

## Claims

1. An orientation and feeding system (100) for feeding cigarettes and providing longitudinal orientation to cigarettes for a tobacco recovery device, the system (100) comprising
a belt conveyor (111),
a feeder for feeding cigarettes onto the belt conveyor (111),
at least one transport channel (112) for receiving, orienting and transporting cigarettes, wherein the transport channel (112) comprises side walls (113) located above the belt conveyor (111) in the direction of movement of the belt conveyor (111) and a bottom constituted by a belt surface of the belt conveyor (111)
wherein the system (100) comprises further a chute (107) arranged between the feeder (101) and the transport channel (112), wherein the chute (107) comprises at least one chute channel (108) for feeding the cigarettes to the transport channel (112),
**characterized in that**
the width of the transport channel (112) decreases towards the bottom,
the feeder is a vibration feeder (101).

2. The orientation and feeding system (100) according to claim 1, **characterised in that** the bottom of the transport channel (112) has a width corresponding to a width of up to four diameters of a cigarette, preferably a width of two to three diameters of a cigarette.

3. The orientation and feeding system (100) according to any one of claims 1 to 2, **characterised in that** the width of the bottom of the transport channel (112) is adjustable.

4. The orientation and feeding system (100) according to any one of claims 1 to 3, **characterised in that** the surface of the side walls (113) of the transport channel (112) is substantially arcuate.

5. The orientation and feeding system (100) according to any one of claims 1 to 3, **characterised in that** the surface of the side walls (113) of the transport channel (112) is substantially flat.

6. The orientation and feeding system (100) according to any one of claims 1 to 5, **characterised in that** the system (100) comprises at least two transport channels (112) arranged adjacent to each other by the side walls.

7. The orientation and feeding system (100) according to claim 1, **characterised in that** the chute channel (108) has the shape of a rounded letter L.

8. The orientation and feeding system (100) according to any one of claims 1 to 7, **characterised in that** the feeder (101) is provided with dividers (106) for separating the cigarettes fed by the feeder (101).

9. The orientation and feeding system (100) according to any one of claims 1 to 8, **characterised in that** the belt conveyor (111) is inclined at an angle (α) relative to the horizontal longitudinal plane (H) crossing the orientation and the system (100), wherein the value of the angle (α) is between 0° and 15°.

10. A device for recovering tobacco from cigarettes comprising:
a perforating unit (200) comprising rotating disc knives for longitudinal perforating cigarettes,
an opening system (400) for extracting tobacco from perforated cigarettes comprising a rotating opening unit (401), and
a separation system (500) for separating tobacco from the wrapping material and/or the filtering material of the mouthpieces, **characterised in that**
the device comprises at least one orientation and feeding system (100) according to any one of claims 1 to 9 for feeding cigarettes to the perforating unit (200).

11. The device for recovering tobacco according to claim 10, **characterised in that** the perforating unit (200) comprises a grooved conveyor (201), wherein the grooved conveyor (201) is inclined at an angle (β) relative to a horizontal longitudinal plane (H) crossing the tobacco recovery device (1), wherein the angle (β) is between 15° and 60°, preferably 40°.

12. A method for feeding cigarettes and providing longitudinal orientation to cigarettes, the method comprising:
feeding cigarettes into at least one transport channel (112) for receiving, orienting and
transporting cigarettes, wherein the transport channel (112) comprises side walls (113) located above the belt conveyor (111) in the direction of movement of the belt conveyor (111) and a bottom constituted by a belt surface of the belt conveyor (111),
transporting the cigarettes through the transport channel (112) in the direction of movement of the belt conveyor (111), providing a longitudinal orientation to the cigarettes in the direction of movement of the belt conveyor (111)
wherein feeding the cigarettes is performed from a feeder and wherein the method comprises further
feeding the cigarettes to the transport channel (112) through a chute (107) arranged between the feeder (101) and the transport channel (112), wherein the chute (107) comprises at least one chute channel (108) for feeding said cigarettes to said transport channel (112),
**characterized in that**
the width of the transport channel (112) decreases towards the bottom,
the feeder is a vibration feeder (101).

13. A method for recovering tobacco from cigarettes, the method comprising perforating cigarettes in a perforating unit (200) for perforating cigarettes,
extracting tobacco from the perforated cigarettes in an opening system (400),
separating tobacco from the cover material of the cigarettes and/or the filtering material of the mouthpieces in the separation system (500),
before feeding cigarettes to the perforating unit (200), feeding cigarettes into at least one transport channel (112) for receiving, orienting and transporting cigarettes is performed, wherein the transport channel (112) comprises side walls (113) located above the belt conveyor (111) in the direction of movement of the belt conveyor (111) and a bottom constituted by a belt surface of the belt conveyor (111),
cigarettes are being transported through the transport channel (112) in the direction of movement of the belt conveyor (111), providing a longitudinal orientation to the cigarettes in the direction of movement of the belt conveyor (111) and delivering the cigarettes to the perforating unit (200)
wherein feeding the cigarettes is performed from a feeder and
feeding the cigarettes to the transport channel (112) is performed through a chute (107) arranged between the feeder (101) and the transport channel (112), wherein the chute (107) comprises at least one chute channel (108) for feeding said cigarettes to said transport channel (112).
**characterized in that**
the width of the transport channel (112) decreases towards the bottom, the feeder is a vibration feeder (101).

## Patentansprüche

1. Orientierungs- und Zuführsystem (100) zum Zuführen von Zigaretten und zum Bereitstellen einer Längsorientierung für Zigaretten für eine Tabakrückgewinnungsvorrichtung, wobei das System (100) Folgendes umfasst einen Bandförderer (111),
eine Zuführung zum Zuführen von Zigaretten auf den Bandförderer (111),
mindestens einen Transportkanal (112) zum Aufnehmen, Orientieren und Transportieren von Zigaretten, wobei der Transportkanal (112) Seitenwände (113), die in Bewegungsrichtung des Bandförderers (111) oberhalb des Bandförderers (111) angeordnet sind, und einen Boden aufweist, der von einer Bandoberfläche des Bandförderers (111) gebildet wird,
wobei das System (100) ferner eine Schurre (107) umfasst, die zwischen der Vibrationszuführung (101) und dem Transportkanal (112) angeordnet ist, wobei die Schurre (107) mindestens einen Schurrenkanal (108) zum Zuführen der Zigaretten zu dem Transportkanal (112) umfasst,
**dadurch gekennzeichnet, dass**
die Breite des Transportkanals (112) zum Boden hin abnimmt,
die Zuführung ein Vibrationszuführung (101) ist.

2. Orientierungs- und Zuführsystem (100) nach Anspruch 1, **dadurch gekennzeichnet, dass** der Boden des Transportkanals (112) eine Breite aufweist, die einer Breite von bis zu vier Durchmessern einer Zigarette, vorzugsweise einer Breite von zwei bis drei Durchmessern einer Zigarette, entspricht.

3. Orientierungs- und Zuführsystem (100) nach einem der Ansprüche 1 bis 2, **dadurch gekennzeichnet, dass** die Breite des Bodens des Transportkanals (112) einstellbar ist.

4. Orientierungs- und Zuführsystem (100) nach einem der Ansprüche 1 bis 3, **dadurch gekennzeichnet, dass** die Oberfläche der Seitenwände (113) des Transportkanals (112) im Wesentlichen bogenförmig ist.

5. Orientierungs- und Zuführsystem (100) nach einem der Ansprüche 1 bis 3, **dadurch gekennzeichnet, dass** die Oberfläche der Seitenwände (113) des Transportkanals (112) im Wesentlichen flach ist.

6. Orientierungs- und Zuführsystem (100) nach einem der Ansprüche 1 bis 5, **dadurch gekennzeichnet, dass** das System (100) mindestens zwei Transportkanäle (112) umfasst, die durch die Seitenwände nebeneinander angeordnet sind.

7. Orientierungs- und Zuführsystem (100) nach Anspruch 1, **dadurch gekennzeichnet, dass** der Schurrenkanal (108) die Form eines abgerundeten Buchstaben L hat.

8. Orientierungs- und Zuführsystem (100) nach einem der Ansprüche 1 bis 7, **dadurch gekennzeichnet, dass** die Zuführung (101) mit Teilern (106) zum Trennen der von der Zuführung (101) zugeführten Zigaretten versehen ist.

9. Orientierungs- und Zuführsystem (100) nach einem der Ansprüche 1 bis 8, **dadurch gekennzeichnet, dass** der Bandförderer (111) unter einem Winkel (α) relativ zur horizontalen Längsebene (H), die das Orientierungs- und Zuführsystem (100) kreuzt, geneigt ist, wobei der Wert des Winkels (α) zwischen 0° und 15° liegt.

10. Vorrichtung zur Rückgewinnung von Tabak aus Zigaretten, die Folgendes umfasst:
eine Perforiereinheit (200) mit rotierenden Scheibenmessern zum Längsperforieren von Zigaretten,
ein Öffnungssystem (400) zum Herausziehen von Tabak aus perforierten Zigaretten, das eine rotierende Öffnungseinheit (401) umfasst, und
ein Trennsystem (500) zum Trennen des Tabaks von dem Hüllmaterial und/oder dem Filtermaterial der Mundstücke, **dadurch gekennzeichnet, dass**
die Vorrichtung mindestens ein Orientierungs- und Zuführsystem (100) nach einem der Ansprüche 1 bis 9 zum Zuführen von Zigaretten zur Perforiereinheit (200) umfasst.

11. Vorrichtung zur Rückgewinnung von Tabak nach Anspruch 10, **dadurch gekennzeichnet, dass** die Perforiereinheit (200) einen Rillenförderer (201) umfasst, wobei der Rillenförderer (201) unter einem Winkel (β) relativ zu einer die Tabakrückgewinnungsvorrichtung (1) kreuzenden horizontalen Längsebene (H) geneigt ist, wobei der Winkel (β) zwischen 15° und 60°, vorzugsweise 40°, beträgt.

12. Verfahren zum Zuführen von Zigaretten und zum Bereitstellen einer Längsorientierung für Zigaretten, wobei das Verfahren umfasst:
Zuführen von Zigaretten in mindestens einen Transportkanal (112) zum Aufnehmen, Orientieren und Transportieren von Zigaretten, wobei der Transportkanal (112) Seitenwände (113), die in Bewegungsrichtung des Bandförderers (111) oberhalb des Bandförderers (111) angeordnet sind, und einen Boden aufweist, der von einer Bandoberfläche des Bandförderers (111) gebildet wird,
Transportieren der Zigaretten durch den Transportkanal (112) in der Bewegungsrichtung des Bandförderers (111), wobei den Zigaretten eine Längsausrichtung in der Bewegungsrichtung des Bandförderers (111) gegeben wird,
wobei das Zuführen der Zigaretten von einer Zuführung aus erfolgt und
wobei das Verfahren umfasst, dass das weitere Zuführen der Zigaretten zu dem Transportkanal (112) durch eine Schurre (107) durchgeführt wird, die zwischen der Vibrationszuführung (101) und dem Transportkanal (112) angeordnet ist, wobei die Schurre (107) mindestens einen Schurrenkanal (108) zum Zuführen der Zigaretten zu dem Transportkanal (112) umfasst,
**dadurch gekennzeichnet, dass**
die Breite des Transportkanals (112) zum Boden hin abnimmt,
die Zuführung eine Vibrationszuführung (101) ist.

13. Verfahren zur Rückgewinnung von Tabak aus Zigaretten, die Folgendes umfasst Perforieren von Zigaretten in einer Perforiereinheit (200) zum Perforieren von Zigaretten, Herausziehen des Tabaks aus den perforierten Zigaretten in einem Öffnungssystem (400), Trennen des Tabaks vom Deckmaterial der Zigaretten und/oder dem Filtermaterial der Mundstücke im Trennsystem (500),
vor dem Zuführen von Zigaretten zu der Perforiereinheit (200) das Zuführen von Zigaretten in mindestens einen Transportkanal (112) zum Aufnehmen, Orientieren und Transportieren von Zigaretten durchgeführt wird, wobei der Transportkanal (112) Seitenwände (113), die in der Bewegungsrichtung des Bandförderers (111) oberhalb des Bandförderers (111) angeordnet sind, und einen Boden aufweist, der durch eine Bandoberfläche des Bandförderers (111) gebildet wird,
Zigaretten durch den Transportkanal (112) in der Bewegungsrichtung des Bandförderers (111) transportiert werden, wobei den Zigaretten eine Längsausrichtung in der Bewegungsrichtung des Bandförderers (111) gegeben wird und die Zigaretten an die Perforiereinheit (200) geliefert werden,
wobei das Zuführen der Zigaretten von einer Zuführung aus erfolgt und
Zuführen der Zigaretten zu dem Transportkanal (112) durch eine Schurre (107) durchgeführt wird, die zwischen der Vibrationszuführung (101) und dem Transportkanal (112) angeordnet ist, wobei die Schurre (107) mindestens einen Schurrenkanal (108) zum Zuführen der Zigaretten zu dem Transportkanal (112) umfasst,
**dadurch gekennzeichnet, dass**
die Breite des Transportkanals (112) zum Boden hin abnimmt,
die Zuführung eine Vibrationszuführung (101) ist.

## Revendications

1. Un système d'orientation et d'alimentation (100) pour alimenter en cigarettes et fournir une orientation longitudinale aux cigarettes pour un dispositif de récupération de tabac, le système (100) comprenant
un convoyeur à bande (111),
un dispositif d'alimentation pour alimenter en cigarettes sur le convoyeur à bande (111),
au moins un canal de transport (112) pour recevoir, orienter et transporter des cigarettes, où le canal de transport (112) comprend des parois latérales (113) situées au-dessus du convoyeur à bande (111) dans le sens de déplacement du convoyeur à bande (111) et un fond constitué par une surface de bande du convoyeur à bande (111),
où le système (100) comprend en outre une chute (107) agencée entre le dispositif d'alimentation à vibrations (101) et le canal de transport (112), où la chute (107) comprend au moins un canal de chute (108) pour alimenter le canal de transport (112) en cigarettes,
**caractérisé en ce que**
la largeur du canal de transport (112) diminue vers le fond,
le dispositif d'alimentation est un dispositif d'alimentation à vibrations (101).

2. Le système d'orientation et d'alimentation (100) selon la revendication 1, **caractérisé en ce que** le fond du canal de transport (112) a une largeur correspondant à une largeur allant jusqu'à quatre diamètres d'une cigarette, de préférence une largeur de deux à trois diamètres d'une cigarette.

3. Le système d'orientation et d'alimentation (100) selon l'une quelconque des revendications 1 à 2, **caractérisé en ce que** la largeur du fond du canal de transport (112) est réglable.

4. Le système d'orientation et d'alimentation (100) selon l'une quelconque des revendications 1 à 3, **caractérisé en ce que** la surface des parois latérales (113) du canal de transport (112) est sensiblement arquée.

5. Le système d'orientation et d'alimentation (100) selon l'une quelconque des revendications 1 à 3, **caractérisé en ce que** la surface des parois latérales (113) du canal de transport (112) est sensiblement plate.

6. Le système d'orientation et d'alimentation (100) selon l'une quelconque des revendications 1 à 5, **caractérisé en ce que** le système (100) comprend au moins deux canaux de transport (112) agencés l'un à côté de l'autre par les parois latérales.

7. Le système d'orientation et d'alimentation (100) selon la revendication 1, **caractérisé en ce que** le canal de chute (108) a la forme d'une lettre L arrondie.

8. Le système d'orientation et d'alimentation (100) selon l'une quelconque des revendications 1 à 7, **caractérisé en ce que** le dispositif d'alimentation (101) est pourvu de séparateurs (106) pour séparer les cigarettes fournies par le dispositif d'alimentation (101).

9. Le système d'orientation et d'alimentation (100) selon l'une quelconque des revendications 1 à 8, **caractérisé en ce que** le convoyeur à bande (111) est incliné d'un angle (α) par rapport au plan longitudinal horizontal (H) traversant l'orientation et le système (100), la valeur de l'angle (α) étant comprise entre 0° et 15°.

10. Un dispositif de récupération de tabac à partir de cigarettes comprenant:
une unité de perforation (200) comprenant des couteaux à disques rotatifs pour la perforation longitudinale des cigarettes,
un système d'ouverture (400) pour extraire du tabac à partir de cigarettes perforées,
comprenant une unité d'ouverture rotative (401), et
un système de séparation (500) pour séparer le tabac à partir du matériau d'emballage et/ou du matériau filtrant des embouchures, **caractérisé en ce que**
le dispositif comprend au moins un système d'orientation et d'alimentation (100) selon l'une quelconque des revendications 1 à 9 pour alimenter l'unité de perforation (200) en cigarettes.

11. Le dispositif de récupération de tabac selon la revendication 10, **caractérisé en ce que** l'unité de perforation (200) comprend un convoyeur rainuré (201), où le convoyeur rainuré (201) est incliné d'un angle (β) par rapport à un plan longitudinal horizontal (H) traversant le dispositif de récupération de tabac (1), l'angle (β) étant comprise entre 15° et 60°, de préférence étant de 40°.

12. Une méthode pour alimenter en cigarettes et fournir une orientation longitudinale aux cigarettes, la méthode comprenant:
l'alimentation au moins un canal de transport (112) en cigarettes pour recevoir, orienter et
transporter des cigarettes, où le canal de transport (112) comprend des parois latérales (113) situées au-dessus du convoyeur à bande (111) dans la direction de déplacement du convoyeur à bande (111) et un fond constitué par une surface de bande du convoyeur à bande (111),
le transport des cigarettes à travers le canal de transport (112) dans le sens de déplacement du convoyeur à bande (111), fournissant une orientation longitudinale aux cigarettes dans le sens de déplacement du convoyeur à bande (111),
où l'alimentation en cigarettes est effectuée à partir d'un dispositif d'alimentation et
où la méthode comprend en outre l'alimentation du canal de transport (112) en cigarettes est effectuée à travers une chute (107) agencée entre le dispositif d'alimentation à vibrations (101) et le canal de transport (112), où la chute (107) comprend au moins un canal de chute (108) pour amener lesdites cigarettes audit canal de transport (112),
**caractérisée en ce que**
la largeur du canal de transport (112) diminue vers le fond,
le dispositif d'alimentation est un dispositif d'alimentation à vibrations (101).

13. Une méthode pour récupérer du tabac à partir de cigarettes, la méthode comprenant la perforation de cigarettes dans une unité de perforation (200) pour perforer des cigarettes, l'extraction du tabac à partir de cigarettes perforées dans un système d'ouverture (400),
la séparation du tabac du matériau de recouvrement des cigarettes et/ou du matériau filtrant des embouchures dans le système de séparation (500),
avant l'alimentation de l'unité de perforation (200) en cigarettes , l'alimentation en cigarettes d'au moins un canal de transport (112) pour recevoir, orienter et transporter des cigarettes est effectuée, le canal de transport (112) comprenant des parois latérales (113) situées au-dessus du convoyeur à bande (111) dans le sens de déplacement du convoyeur à bande (111) et un fond constitué par une surface de bande du convoyeur à bande (111),
les cigarettes sont transportées à travers le canal de transport (112) dans le sens de déplacement du convoyeur à bande (111), fournissant une orientation longitudinale aux cigarettes dans le sens de déplacement du convoyeur à bande (111) et fournissant les cigarettes à l'unité de perforation (200),
où l'alimentation en cigarettes est effectuée à partir d'un dispositif d'alimentation et l'alimentation du canal de transport (112) en cigarettes est effectuée à travers une chute (107) agencée entre le dispositif d'alimentation à vibrations (101) et le canal de transport (112), où la chute (107) comprend au moins un canal de chute (108) ledit amener lesdites cigarettes audit canal de transport (112),
**caractérisée en ce que**
la largeur du canal de transport (112) diminue vers le fond,
le dispositif d'alimentation est un dispositif d'alimentation à vibrations (101).
